# EUROPEAN PATENT SPECIFICATION

(11) **EP 0 883 505 B1**
(45) Date of publication and mention of the grant of the patent: **07.11.2001**
(21) Application number: 97905551.4
(22) Date of filing: 25.02.1997
(51) Int. Cl.: B60G 11/46

(54) **WHEEL SUSPENSION DEVICE**
RADAUFHÄNGUNG
DISPOSITIF DE SUSPENSION

(30) Priority: 26.02.1996 SE 9600719
(43) Date of publication of application: 16.12.1998
(73) Proprietor: SJÖLUND, Anders, S-921 34 Lycksele (SE); FORSGREN, Stellan, S-921 41 Lycksele (SE)
(72) Inventor: SJÖLUND, Anders, S-921 34 Lycksele (SE); FORSGREN, Stellan, S-921 41 Lycksele (SE)
(74) Representative: Onn, Thorsten
(86) International application number: SE9700316
(87) International publication number: WO9730861

(56) References cited:
- WO-A-95/06571
- DE-A- 2 306 392
- US-A- 4 858 949
- US-A- 4 923 210
- US-A- 5 346 247

## Description

This invention relates to a wheel suspension device of the rear part of a vehicle which in a conventional way has a rear axle connecting the two rear wheels with each other.

It is previously known to provide vehicles, having a rear part comprising leaf springs, with a wheel suspension device for the rear part of the vehicle comprising air spring suspension. In this connection the leaf springs of the vehicle, after having been cut off, are utilized as suspension support for the wheel suspension device or the leaf springs are exchanged for flat bars, suitable for the purpose. In this connection is referred to international patent publication WO 95/06571.

A drawback with this solution is that the wheel suspension device becomes relatively expensive to manufacture, since it comprises a special plate arrangement as a support for the lower part of the air bellows.

Furthermore, by American patent US-A-5.346.247 which represents the closest prior art it is known a wheel suspension device, in which a leaf spring-like means functions as a support for the lower part of a bellows, which is possible to blow up. In this connection the leaf spring-like means is bent down at the rear axle of the vehicle, and the rear part of the means is twisted about 45° in relation to the front part. This design results in that the rubber bellows gets a position at a long distance, relatively spoken, from the rear axle, which leads to two drawbacks, namely a not completely good comfort and an insufficient ability of the vehicle to be lowered.

This invention intends to remove the drawbacks of the known technique and to provide a technical solution having the consequence that the rubber bellows can be placed close to the rear axle of the vehicle with the advantages this means. This has been made possible by the fact that the wheel suspension device has the features mentioned in the claims.

The invention also relates to the specially designed, leaf spring-like means.

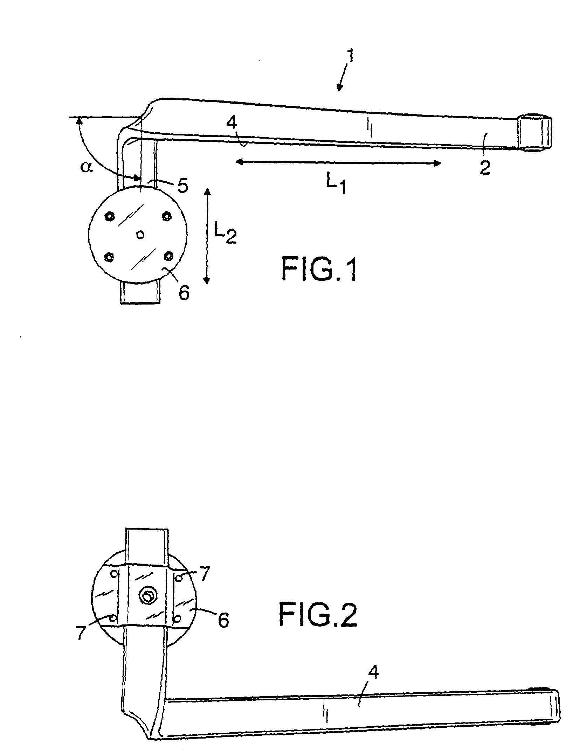

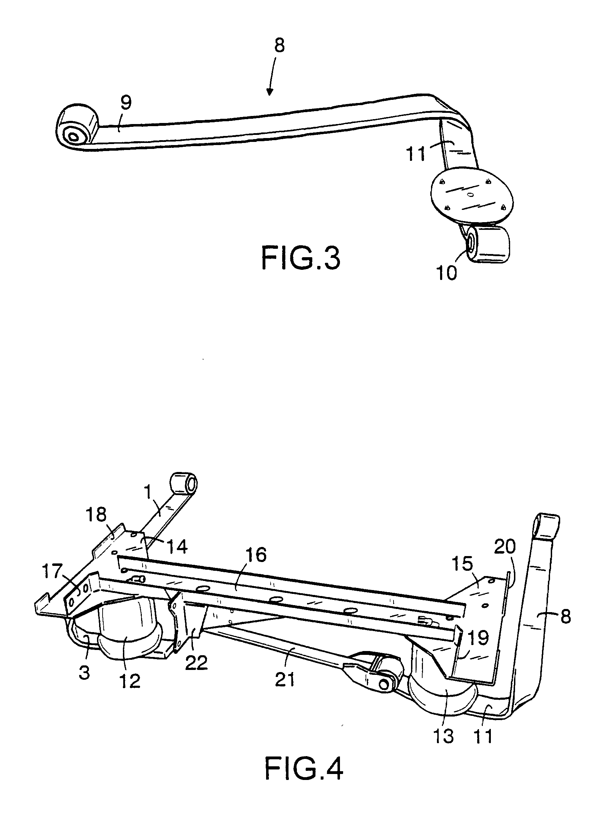

A preferred embodiment of the leaf spring-like means according to the invention shall be described more closely below with reference to the accompanying drawing, in which **Fig. 1** shows a means, which is intended to be applied at the left side of the vehicle, seen in relation to its longitudinal centre line with the observer behind the vehicle, **Fig. 2** shows the means according to Fig. 1, seen from below, and **Fig. 3** shows a leaf spring-like means, which is intended to be applied at the right side of the vehicle. In the drawing figure 4 is a wheel suspension device according to the invention, seen from behind, depicted, the leaf spring-like means according to the invention being parts of the same.

The leaf spring-like means 1, according to the invention and Fig. 1, has a front portion 2, which has such a design that the means articulately can be fastened to the underframe of the vehicle. The means 1 has such a position that its principal longitudinal direction L1 is essentially parallel with the longitudinal direction of the vehicle. The rear portion 3 of the leaf spring-like means 1. according to the invention, is twisted in relation to the remaining part of the means, so that the longitudinal direction L2 of the rear portion 3 is essentially perpendicular to the longitudinal direction L1. The twisting is made in that way that the bottom portion 4 of the means 1 at the longitudinal part of the means becomes a top portion 5 at the essentially transverse part of the means. Due to that fact a plane portion 5 is created, which is intended to constitute a lower supporting surface for an air bellows, intended for it. Furthermore, this twisting of the leaf spring-like means makes possible that its rear portion 3 simply can take a position where the portion 3 is directed obliquely forwards, which results in great advantages.

As a matter of fact the twisting angle α of the rear portion in relation to the front portion 2 is suitably the same as or greater than 90° but less than 180°.

In order that the supporting surface shall be greater, the plane portion 5, as is shown in the drawing, is provided with a plate 6 of suitable size, which is fastened on the portion 5 by means of a suitable bolt joint 7 or the like. This joint 7 is designed in that way that the plate 6 can take different side positions on the portion 5.

In Fig. 3 is shown a leaf spring-like means 8, which is intended to be fastened on the underframe of the vehicle at its right side, seen in the longitudinal direction of the vehicle when the observer stands behind the vehicle. This leaf spring-like means 8 is almost identical with the first described leaf spring-like means 1 and has accordingly in similarity with this one a front part 9, which is intended to be articulately fastened on the underframe of the vehicle.

The only difference between the two means 1, 8 is that the later one has a sleeve-like projection 10 farthest out on its essentially transverse portion 11, which projection is intended to make a flexible fastening of a stabilization rod to the portion 11 possible.

In Fig. 4 is shown the new wheel suspension device, which is provided with the leaf spring-like means 1, 8 according to the invention. Thus, each one of the essentially transverse portions 3, 11 of these means constitutes a lower supporting surface for an air bellows 12, 13. Each one of the upper supporting surfaces for these bellows consists of a plate 14, 15, which plates are connected with a transverse, stabilizing girder 16. The plates 14, 15 on their top sides are provided with flanges 17, 18; 19, 20 or the like, projecting up, which facilitate the fastening of the wheel suspension device on longitudinal frame members of the underframe of the vehicle.

The wheel suspension device has further a lower, stabilizing rod 21, the one end of which is articulately fastened on the projection 10 at the essentially transverse portion 11 of the means 8. The other end portion of the rod 21, according to this embodiment, is articulately fastened on means 22, which are arranged at and project down from the underside of the girder 16.

As has been mentioned previously this invention makes a twisting of the rear portion in relation to the front portion possible, so that the twisting angle α becomes greater than 90°. This fact in its turn has the consequence that the air bellows comes more closely to the rear axle, which in the normal case is positioned just in front of the girder 16. The fact that the air bellows comes close to the rear axle leads to two essential advantages:
Firstly, due to the fact that the comfort increases, and secondly the ability of the vehicle to be lowered down increases, which is of greatest importance during loading and unloading.

Furthermore, this invention makes possible for the air bellows to be positioned inside of the frame members of the vehicle, seen from the longitudinal centre line of the vehicle. This fact also leads to an improved ability of the vehicle to be lowered down.

In the text has been mentioned "leaf spring-like means". This phrase partly comprises conventional leaf springs, partly bars of flat iron type.

The invention is of course not limited to the shown and described embodiment but can be modified within the scope of the following claims.

## Claims

1. A wheel suspension device for the rear part of a vehicle, which in a conventional way has a rear axle connecting the two rear wheels with each other, **characterized by** the combination of the following features:
- It comprises two essentially parallel-arranged, leaf spring-like means (1, 8) with a longitudinal direction, which essentially corresponds to the longitudinal direction of the vehicle, each means comprising an elongated front part (2, 9), which is intended to be articulately fastened to the chassis of the car in front of the rear axle of the car, and an essentially transverse rear part (3, 11), which is twisted inwards in relation to the front part in such a way that the bottom portion (4) of the means (1, 8) at the front part (2, 9) of the means becomes a top portion (5) at the essentially transverse rear part (3, 11) of the means, the twisting angle α of the rear part in relation to the front part suitably being the same as or greater than 90° but less than 180°;
- The transverse part (3, 11) of each means (1, 8) functions as a support and contact surface for the bottom part of a bellows (12, 13), which can be blown up, and the upper part of which is intended to be in contact with the underside of a plate (14, 15) or the like, being part of the wheel suspension device;
- The two plates (14, 15) are connected by a stabilizing girder (16) and are made in that way that they can be fastened to the underframe of the vehicle;
- A stabilizing rod (21) articulately connects the transverse portion (11) of the one means (8) with the underpart of the transverse girder (16) at the area on the opposite side of the girder.

2. A leaf spring-like means for use in a wheel suspension device according to claim 1, **characterized in that** it comprises an elongated front part (2, 9), the end portion of which is intended to be articulately fastened to the chassis of a vehicle, and an essentially transverse rear part (3; 11) which is twisted in relation to the front part in such a way that the bottom portion (4) of the means (1, 8) at the front part (2, 9) of the means becomes a top portion (5) at the essentially transverse rear part (3, 11) of the means, the twisting angle α of the essentially transverse rear part in relation to the front part suitably being the same as or greater than 90° but less than 180°.

3. A means according to claim 2, **characterized in that** the essentially transverse rear part (3, 11) of the means (1, 8) has a sleeve-formed element (10) farthest out on it, which makes possible a flexible fastening of a stabilization rod on the same.

4. A means according to claim 2 or 3, the essentially transverse rear part (3, 11) having a plane top surface (5), **characterized in that** the essentially transverse rear part (3,11) is provided with a plate (6) of suitable size, which is fastened on the top surface (5) of the part (3, 11) by means of a bolt joint (7) in such a way that the plate (6) can take different side positions on the part (3, 11)

## Patentansprüche

1. Radstoßdämpfervorrichtung für den hinteren Teil eines Fahrzeugs, welches in herkömmlicher Art und Weise eine Hinterachse hat, welche die beiden Hinterräder miteinander verbindet, **gekennzeichnet durch** die Kombinat.ion der folgenden Merkmale:
- Sie weist zwei im Wesentlichen parallel angeordnete, blattfederartige Mittel (1, 8) auf, deren Längsrichtung im Wesentlichen der Längsrichtung des Fahrzeugs entspricht, wobei jedes Mittel einen länglichen vorderen Teil (2, 9) aufweist, welcher gelenkig am Fahrgestell des Fahrzeugs vor der Hinterachse des Fahrzeugs befestigt werden soll, sowie einen im Wesentlichen quer verlaufenden hinteren Teil (3, 11), welcher einwärts bezüglich des vorderen Teils so verdreht ist, dass der untere Bereich (4) der Mittel (1, 8) an dem vorderen Teil (2, 9) der Mittel ein oberer Bereich (5) an dem im Wesentlichen quer verlaufenden hinteren Teil (3, 11) der Mittel wird, wobei der Verdrehwinkel α des hinteren Teils bezüglich des vorderen Teils in geeigneter Weise gleich oder größer als 90°, aber kleiner als 180° ist.
- Der quer verlaufende Teil (3, 11) jedes Mittels (1, 8) dient als Lager- und Kontaktfläche für den unteren Teil eines Faltenbalgs (12, 13), welcher aufgeblasen werden kann und dessen oberer Teil in Kontakt mit der Unterseite einer Platte (14, 15) oder ähnlichem geraten soll, welche Teil der Radstoßdämpfervorrichtung ist.
- Die beiden Platten (14, 15) sind mittels eines stabilisierenden Trägers (16) verbunden und so ausgestaltet, dass sie an dem unteren Rahmen des Fahrzeugs befestigt werden können.
- Eine stabilisierende Stange (21) verbindet den quer verlaufenden Bereich (11) des einen Mittels (8) gelenkig mit dem unteren Teil des querverlaufenden Trägers (16) in dem Bereich an der gegenüberliegenden Seite des Trägers.

2. Blattfederartiges Mittel zur Verwendung in einer Radstoßdämpfervorrichtung nach Anspruch 1, **dadurch gekennzeichnet, dass** sie einen länglichen vorderen Teil (2, 9) aufweist, dessen Endbereich gelenkig an dem Fahrgestell eines Fahrzeugs befestigt werden soll, sowie einen im Wesentlichen quer verlaufenden hinteren Teil (3, 11), welcher bezüglich des vorderen Teils so verdreht ist, dass der untere Bereich der Mittel (1, 8) an dem vorderen Teil (2, 9) der Mittel ein oberer Bereich (5) an dem im Wesentlichen querverlaufenden hinteren Teil (3, 11) der Mittel wird, wobei der Verdrehwinkel α des im Wesentlichen querverlaufenden hinteren Teils bezüglich des vorderen Teils in geeigneter Weise gleich oder größer als 90°, aber kleiner als 180° ist.

3. Mittel nach Anspruch 2, **dadurch gekennzeichnet, dass** der im Wesentlichen quer verlaufende hintere Teil (3, 11) der Mittel (1, 8) ein hülsenförmiges Element (10) an seinem am weitesten außenliegenden Bereich hat, welches es ermöglicht, eine Stabilisierungsstange flexibel an demselben zu befestigen.

4. Mittel nach Anspruch 2 oder 3, wobei der im Wesentlichen quer verlaufende hintere Teil (3, 11) eine ebene obere Fläche (5) hat, **dadurch gekennzeichnet, dass** der im Wesentlichen quer verlaufende hintere Teil (3, 11) mit einer Platte (6) mit einer geeigneten Größe versehen ist, welche an der oberen Fläche (5) des Teils (3, 11) mittels einer Bolzenverbindung (7) so befestigt ist, dass die Platte (6) unterschiedliche Seitenstellungen an dem Teil (3, 11) einnehmen kann.

## Revendications

1. Dispositif de suspension de roues pour la partie arrière d'un véhicule comportant, de manière classique, un essieu arrière reliant l'une à l'autre les deux roues arrière, **caractérisé par** la combinaison des particularités suivantes :
- il comprend deux moyens (1, 8) du type lame de ressort agencés pour l'essentiel parallèlement, offrant une direction longitudinale correspondant sensiblement à la direction longitudinale du véhicule, chaque moyen présentant une partie antérieure allongée (2, 9) conçue pour être fixée au châssis du véhicule, de manière articulée, devant l'essieu arrière dudit véhicule, et une partie postérieure (3, 11) sensiblement transversale qui est tordue vers l'intérieur, par rapport à la partie antérieure, de façon telle que la région inférieure (4) des moyens (1, 8), sur la partie antérieure (2, 9) desdits moyens, devienne une région supérieure (5) sur ladite partie postérieure sensiblement transversale (3, 11) desdits moyens, l'angle de torsion α de la partie postérieure, vis-à-vis de la partie antérieure, étant adéquatement égal ou supérieur à 90°, mais inférieur à 180° ;
- la partie transversale (3, 11) de chaque moyen (1, 8) remplit la fonction d'une surface de support et de contact affectée à la partie inférieure d'un soufflet (12, 13) pouvant être gonflé, et dont la partie supérieure est destinée à être en contact avec la face inférieure d'une console (14, 15) ou pièce similaire, formant partie intégrante du dispositif de suspension de roues ;
- les deux consoles (14, 15) sont solidarisées par une poutrelle stabilisatrice (16) et sont réalisées de manière à pouvoir être fixées au faux-châssis du véhicule ;
- une barre stabilisatrice (21) assure la liaison articulée de la région transversale (11) de l'un (8) des moyens avec la partie inférieure de la poutrelle transversale (16), dans la zone située sur le côté opposé de ladite poutrelle.

2. Moyen du type lame de ressort, destiné à être utilisé dans un dispositif de suspension de roues conforme à la revendication 1, **caractérisé par le fait qu'**il comprend une partie antérieure allongée (2, 9) dont la région extrême est conçue pour être fixée de manière articulée au châssis d'un véhicule, et une partie postérieure (3, 11) sensiblement transversale qui est tordue, par rapport à la partie antérieure, de façon telle que la région inférieure (4) des moyens (1, 8), sur la partie antérieure (2, 9) desdits moyens, devienne une région supérieure (5) de ladite partie postérieure sensiblement transversale (3, 11) desdits moyens, l'angle de torsion α de la partie postérieure sensiblement transversale, vis-à-vis de la partie antérieure, étant adéquatement égal ou supérieur à 90°, mais inférieur à 180°.

3. Moyen selon la revendication 2, **caractérisé par le fait que** la partie postérieure sensiblement transversale (3, 11) des moyens (1, 8) possède un élément (10) en forme de douille qui occupe une position extrême la plus extérieure, sur ladite partie, et autorise la fixation flexible d'une barre stabilisatrice sur ladite partie.

4. Moyen selon la revendication 2 ou 3, la partie postérieure (3, 11) sensiblement transversale présentant une surface supérieure plane (5), **caractérisé par le fait que** ladite partie postérieure (3, 11) sensiblement transversale est munie d'une plaque (6) de dimension adéquate qui est fixée sur la surface supérieure (5) de ladite partie (3, 11), au moyen d'une solidarisation boulonnée (7), de telle sorte que ladite plaque (6) puisse prendre différentes positions latérales sur ladite partie (3, 11).
